# FASCICULE DE BREVET EUROPEEN

(11) **EP 0 881 590 B1**
(45) Date de publication et mention de la délivrance du brevet: **13.09.2000**
(21) Numéro de dépôt: 98401288.0
(22) Date de dépôt: 28.05.1998
(51) Int. Cl.: G06K 7/00, G07F 7/10, G11C 29/00

(54) **Protocole de communication pour carte à mémoire asynchrone**
Kommunikationsprotokoll für asynchrone Chipkarten
Communications protocol for asynchronous IC cards

(30) Priorité: 30.05.1997 FR 9706702
(43) Date de publication de la demande: 02.12.1998
(73) Titulaire: STMicroelectronics S.A., 94250 Gentilly (FR)
(72) Inventeur: Deveaud, Vincent, 94230 Cachan (FR)
(74) Mandataire: Ballot, Paul

(56) Documents cités:
- WO-A-96/38804
- FR-A- 2 705 811
- US-A- 5 414 835
- US-A- 5 533 204

## Description

La présente invention concerne un protocole de communication pour cartes à mémoire asynchrone. Elle s'applique notamment au test des cartes à mémoire ainsi qu'à leur initialisation.

On entend par carte à mémoire, une carte comprenant une puce au moins de circuit intégré noyée dans le matériau de la carte et montée sur un connecteur affleurant, répondant à la normalisation ISO 7816. Ce connecteur offre cinq à six contacts normalisés. Ces contacts sont la masse électrique GND, l'alimentation logique VCC (+3 ou +5 volts), la remise en zéro de la carte RST, l'horloge CLK, l'entrée/sortie de données I/O et pour certaines cartes, la tension de programmation Vpp (10 à 21 Volts). Ces contacts permettent une transmission série sur la ligne I/O, plus particulièrement normalisée dans la partie 7816-3 de la norme. Des variantes à cette norme existent, notamment avec des cartes utilisant des mémoires à bus I2C. Le débit de transmission est couramment 9600 ou 19200 bauds. Mais certaines cartes ont des débits de 115200 bauds et plus.

On distingue deux grandes familles de cartes à mémoire, l'une à transmission synchrone et l'autre à transmission asynchrone.

La transmission synchrone est celle en général des cartes à mémoire simples ou sécurisées, l'entrée/sortie des bits étant directement cadencée par le signal d'horloge CLK, avec un accès séquentiel dans l'ordre croissant de leurs adresses.

Les cartes à mémoire asynchrones sont pour la plupart des cartes à microprocesseur. La transmission s'effectue par octet ou bloc d'octets sur la ligne d'entrée/sortie I/O. C'est au système hôte de la carte à mémoire de scruter cette ligne pour détecter la réception d'un message transmis par la carte. C'est une caractéristique générale de la transmission asynchrone, quelle que soit le protocole utilisé, qu'il réponde à la norme 7816 ou à d'autres normes.

On entend par système hôte, le lecteur de carte d'un point de vente ou de distribution d'argent, le téléphone portable, le décodeur de télévision ou tout autre système qui communique avec la carte à mémoire qui lui est présentée.

Pour permettre la communication d'un système hôte avec une carte à mémoire qui dans la pratique peut provenir de différents fabricants et émetteurs, les protocoles intègrent l'envoi d'un message ATR (Answer to Reset) par la carte en réponse à une remise à zéro (signal RST activé). Le contenu du message ATR identifie la carte quant à son type (mémoire simple, à microprocesseur, ...), son protocole, la nécessité ou non d'une tension de programmation Vpp avec sa valeur le cas échéant (10, 15, 21 Volts), toutes informations qui permettent au système hôte de se configurer de manière adaptée pour communiquer avec la carte qui lui est présentée.

Les protocoles de transmission asynchrones sont ainsi bien adaptés aux applications des cartes à mémoire pour lesquelles un système hôte n'a à traiter à un moment donné qu'avec une seule carte à mémoire, celle qui lui est présentée, dans des applications telles que le paiement, la télécommunication, la télévision à péages, les cartes de fidélité, ...

S'agissant du test des carte à mémoire au sortir de la fabrication ou de la personnalisation des cartes jugées bonnes par ce test, ces protocoles s'avèrent très pénalisants. En effet, il n'est pas possible de traiter plusieurs cartes en parallèle, puisque le système hôte est tributaire de chaque carte qui est maître du moment où elle transmet sa réponse. Le système hôte doit donc scruter la ligne I/O correspondante pour chaque caractère à recevoir. Comme en test, une grande quantité d'information doit être transmise entre le système hôte et la carte, cela est très lent.

Ceci est vrai pour le test, mais aussi pour la personnalisation des cartes qui consiste en la programmation d'un flot de données avec quelques centaines ou milliers d'octets, dont la majorité correspond à un tronc commun à toutes les cartes, une minorité de données qui peut se chiffrer en quelques dizaines ou centaines d'octets, étant propre à chaque carte.

Le test et la personnalisation d'une carte peuvent ainsi prendre une à plusieurs dizaines de secondes. Le système hôte, testeur ou programmateur ne peut donc traiter qu'une carte après l'autre. Ce traitement en série entraîne un temps très long de test et personnalisation d'un lot de cartes, ce qui rend cette étape de fin de fabrication très pénalisante du point de vue des délais de fabrication, même en prévoyant plusieurs testeurs et programmateurs.

Un objet de l'invention est ainsi d'améliorer le temps de test et de personnalisation des cartes à mémoire à protocole de transmission asynchrone.

Partant de l'observation suivante, que dans le cas du test ou de la personnalisation, le système hôte (testeur ou programmateur) connaît les caractéristiques des cartes qu'il traite, on a cherché un moyen d'exploiter cette connaissance pour permettre le traitement parallèle simultané des cartes.

Le moyen a été trouvé dans l'invention dans un procédé de communication selon lequel, au lieu de scruter la ligne I/O dans l'attente d'une réponse, le système hôte envoie à la carte une demande de réponse. Après avoir exécuté une instruction de commande préalablement reçue, c'est la carte qui va scruter la ligne I/O dans l'attente de cette demande de réponse. Quand elle a détecté cette demande de réponse, elle prépare et envoie sa réponse. Le système hôte connaît le temps nécessaire à l'exécution de l'instruction et envoie sa demande de réponse quand ce temps est écoulé, puis se positionne (échantillonnage) pour recevoir le message. En test, cela permet au système hôte de contrôler les durées d'exécution des instructions de commande (remise à zéro, lecture, programmation, comparaison ou autres). En programmation, cela lui permet d'avoir une durée de programmation optimum. En rendant le système hôte maître du moment de l'envoi du message de la réponse, on lui permet de traiter plusieurs cartes simultanément, en parallèle.

Dans le procédé de communication selon l'invention, on part du protocole de transmission asynchrone mis en oeuvre par la carte au moyen d'un sous-programme exécutable mémorisé dans la carte, pour réaliser un sous-programme exécutable modifié intégrant l'instruction de demande de réponse à recevoir avant tout envoi sur la ligne I/O, ce sous-programme exécutable modifié étant également mémorisé dans la carte. On peut prévoir qu'au départ, suivant la fabrication, le sous-programme actif est le sous-programme modifié, utilisé pour le test. Si la carte est trouvée bonne, l'étape de personnalisation de la carte prévoit d'invalider ce sous-programme exécutable modifié au profit du premier qui est le sous-programme opérationnel. Cette invalidation peut se faire par claquage de fusibles d'accès par exemple ou inscription de toute donnée inaltérable (au moyen de cellules mémoire par exemple).

Dans une variante, le sous-programme exécutable modifié est activé par un signal de mode de test par exemple, puis désactivé comme précédemment pour rendre actif le sous-programme exécutable opérationnel.

Telle que caractérisée, l'invention concerne donc un procédé selon la revendication 1 et une carte selon la revendication 5.

D'autres caractéristiques et avantages de l'invention sont présentés dans la description suivante, faite à titre indicatif et non limitatif de l'invention, en référence aux dessins annexés dans lesquels :
- la figure 1 représente un schéma d'un système hôte pour traiter plusieurs cartes à mémoire simultanément,
- la figure 2 représente un schéma bloc d'une carte à mémoire selon l'invention,
- la figure 3 représente un exemple de séquences de données émises sur la ligne I/O par le système hôte et par la carte selon le procédé de communication de l'invention et
- la figure 4 montre un exemple de format de caractère et l'échantillonnage correspondant par le système hôte.

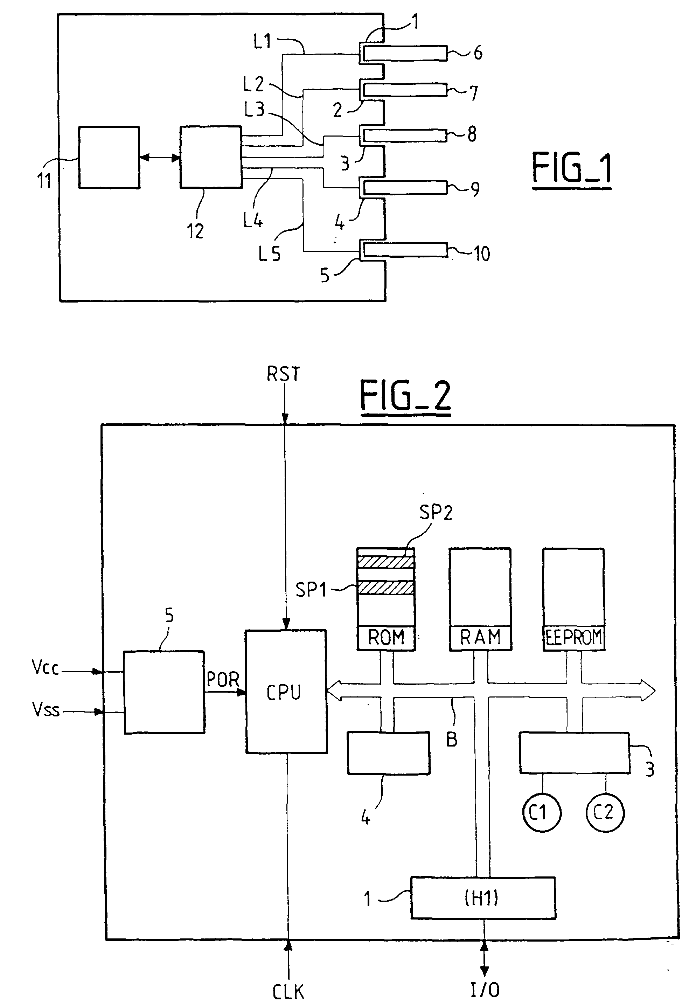

La figure 1 montre un système hôte selon l'invention qui comprend plusieurs connecteurs 1 à 5 pour chacun recevoir et connecter une carte à mémoire 6 à 10. Chaque connecteur est relié à des moyens de traitement 11 de type ordinateur par des liaisons périphériques d'entrée/sortie L1 à L5 et un circuit de relais et d'aiguillage (avec échantillonnage) 12.

Un schéma-bloc d'une carte à mémoire est représenté sur la figure 2, à titre d'exemple.

La carte à mémoire représentée comprend un microprocesseur CPU et différentes mémoires. Une mémoire ROM comprend typiquement le programme exécutable par le microprocesseur. Une mémoire volatile RAM contient les données reçues de la ligne d'entrée/sortie I/O, des données sur lesquelles des calculs ou autres sont à effectuer ou encore des données de messages à émettre sur la ligne d'entrée/sortie I/O. Une mémoire EEPROM contient classiquement des données de personnalisation de la carte (type, numéro émetteur, numéro de série, code personnel, ...), des données ou des programmes applicatifs.

La ligne d'entrée/sortie I/O est gérée par un circuit d'interface 1 qui transforme les informations reçues sur la ligne, en données admissibles par le CPU.

La transmission est cadencée à une fréquence d'horloge H1, généralement sous multiple de la fréquence d'horloge CLK appliquée à la carte.

Un circuit logique de sécurité 3 est représenté, couplé à différents capteurs C1, C2 pour contrôler par exemple la fréquence horloge ou encore le niveau de la tension d'alimentation logique Vcc. La liste des contrôles possibles n'est pas exhaustive.

Un circuit auxiliaire de calcul 4 a aussi été représenté, qui peut être par exemple un multiplieur, pour réaliser des calculs spécifiques sur des données.

Toutes ces ressources mémoires, auxiliaire de calcul 4, de sécurité 3 ou d'interface entrée/sortie sont accessibles par le microprocesseur CPU au moyen d'un bus B d'adresses et de données.

Le signal de remise à zéro RST est appliqué directement sur le microprocesseur CPU.

Enfin, un circuit de ré-initialisation 5 est prévu pour fournir un signal d'initialisation POR, notamment appliqué au microprocesseur pour l'initialiser sur détection d'une mise ou remise sous tension de la carte.

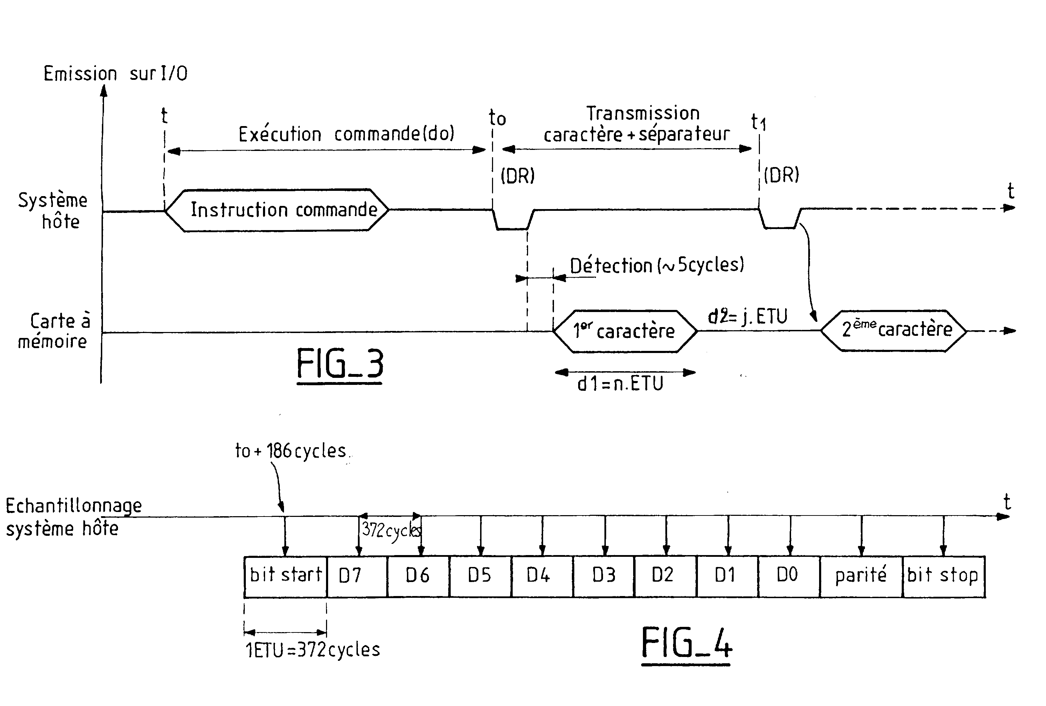

On a vu que la mémoire ROM est prévue pour contenir le programme exécutable par la carte. Elle contient notamment des données correspondant à un sous-programme exécutable SP1 relatif au protocole de transmission asynchrone utilisé par la carte pour détecter des instructions à exécuter et transmettre des réponses correspondantes selon un format bien défini. On s'intéresse par exemple à un protocole identifié par le code T=1 dans la norme 7816-3, encore appelé protocole bloc. Un message consiste en un caractère ou une suite de caractères. Chaque caractère est transmis selon un format déterminé représenté sur la figure 4, comprenant un bit de synchronisation (bit start) suivi d'un octet de données à transmettre (8 bits), d'un bit de parité et enfin d'un ou plusieurs bits de stop. Chaque bit transmis est de même longueur notée ETU (Elementary Time Unit) et les bits start de deux caractères consécutifs d'un message doivent être séparés d'un intervalle égal à j.ETU. j est égal à 0.ETU au minimum.

Le bit de synchronisation (start), que l'on retrouve dans tous les protocoles asynchrones, permet au système hôte qui scrute la ligne d'entrée/sortie I/O de détecter le début d'un caractère. Quand il détecte ce bit de synchronisation, il peut se positionner pour échantillonner les bits suivants du caractère en se plaçant au milieu de chacun des bits de donnée pour en déterminer la valeur. A chaque bit reçu, le bit de parité est recalculé par le système hôte pour pouvoir comparer à la fin le bit de parité calculé avec le bit de parité transmis sur la ligne pour rejeter le caractère quand ils ne correspondent pas (caractère mal lu).

Le sous-programme exécutable SP1 permet de faire correspondre à chaque instruction de commande reçue par la carte, une action à réaliser et un message de réponse correspondant à envoyer. Après avoir envoyé une demande de remise à zéro par activation du signal RST, ou une instruction de lecture, d'écriture, ou de comparaison ou autres, par envoi d'un message d'instruction sur la ligne I/O, le système hôte scrute sa ligne d'ENTRÉE/SORTIE I/O pour détecter un bit de synchronisation (start) du message de réponse correspondant envoyé par la carte. Quand il détecte ce bit de synchronisation, il peut échantillonner les bits suivants selon la procédure précédemment décrite.

Selon l'invention un deuxième sous-programme exécutable SP2 est prévu, mémorisé en mémoire ROM. Ce sous-programme correspond au protocole de transmission asynchrone précédent, mais modifié pour gérer une instruction supplémentaire de demande de réponse DR. Plus précisément, ce deuxième sous-programme SP2 est tel que l'exécution d'une instruction de commande comprend une étape supplémentaire avant l'envoi du message de réponse. Cette étape supplémentaire consiste en l'attente de réception sur la ligne I/O d'une instruction de demande de réponse DR, envoyée par le système hôte, avant d'émettre un message ou un caractère du message. Un tel fonctionnement selon l'invention est représenté sur la figure 3 de manière schématique. Avec le deuxième sous-programme SP2, la carte à mémoire se place dans une boucle d'attente d'une instruction de demande de réponse DR avant l'envoi du message de réponse ou de chaque caractère de ce message. Dès qu'elle a pu détecter cette instruction DR, elle envoie le premier message ou un caractère du message au format du protocole asynchrone (bit start, octet, bit de parité et bit(s) de stop), puis revient dans la boucle d'attente d'une instruction DR.

Dans une utilisation pratique du procédé de communication selon l'invention, que ce soit pour le test ou la personnalisation de la carte, le système hôte connaît les caractéristiques des cartes qu'il a à traiter : Durée ETU, durée maximale d'exécution d'une instruction d0, intervalle j.ETU entre deux caractères, ainsi que le nombre de caractères de chacun des messages attendus.

Ainsi, quand il remet à zéro la carte, ou qu'il envoie une instruction de commande particulière à la carte (lecture, ...), il décompte la durée maximale d'exécution correspondante d0 pour envoyer à l'échéance t0 de cette durée une demande de réponse DR, comme schématiquement représenté sur la figure 3, dans le cas où le système hôte émet une demande de réponse DR pour chaque caractère. La carte détecte cette sollicitation (par exemple un niveau zéro sur quelques cycles horloge). Elle envoie alors le premier caractère du message, au format du protocole asynchrone, soit dans l'exemple bit start , octet, bit de parité, bit de stop. Le système hôte lui, après avoir envoyé sa demande de réponse DR, se positionne au milieu du premier bit à recevoir, puis du deuxième, ... jusqu'à avoir le caractère complet. Par exemple, si la durée ETU est égale à 372 cycles d'horloge H1 (durée par défaut spécifiée par la norme ISO 7816), il déclenche l'échantillonnage à t0+372/2 cycles pour le premier bit qui est ici le bit de synchronisation, puis il échantillonne tous les 372 cycles. Si le caractère reçu n'est pas celui attendu, c'est que la carte est défectueuse.

Dans le même temps, le système hôte décompte la durée de transmission d'un caractère, égale à n.ETU, n étant le nombre de bits du caractère, augmentée de l'intervalle de temps séparant la transmission de deux caractères consécutifs, soit j.ETU, pour émettre une deuxième sollicitation DR. Il vient ensuite échantillonner le deuxième caractère comme précédemment décrit.

La séquence de transmission dans le cas où la carte envoie le message (et non plus un seul caractère) en réponse à la demande de réponse DR se déduit facilement, par analogie.

Le système hôte est ainsi maître de la réception et peut synchroniser la réception de toutes les cartes qu'il a à traiter en parallèle, simultanément.

L'activation de l'un ou l'autre sous-programme peut se faire au moyen de fusibles ou autres indicateurs (par exemple une cellule ou une combinaison de cellules de mémoire EEPROM) qui déroutent l'adresse de gestion du protocole de transmission sur l'un ou l'autre selon les circonstances.

On peut ainsi prévoir que le sous-programme SP2 est actif au sortir de la fabrication. Après la validation de la carte par le testeur, on prévoit dans l'étape suivante de claquer des fusibles ou de positionner tout autre type d'indicateurs aptes à activer le sous-programme SP1 et à désactiver le sous-programme SP2.

La demande de réponse DR émise par le système hôte peut prendre toute forme détectable par la carte. Dans un exemple de cartes, il peut s'agir d'un niveau zéro maintenu pendant quelques cycles d'horloge H1, 10 cycles par exemple.

Le format de caractère est inchangé. Dans l'exemple, il comprend le bit de synchronisation (start), l'octet, le bit de parité et le(s) bit(s) de stop. Ce n'est bien sûr qu'un exemple de format, pris à titre indicatif. L'application de l'invention ne se limite pas à ce format.

Pour améliorer encore les performances du procédé de communication selon l'invention, on peut prévoir dans une variante de supprimer le bit de synchronisation dans le caractère transmis par la carte avec le sous-programme SP2. En effet, ce bit de synchronisation ne sert plus à rien avec ce procédé. Le temps de test et de personnalisation s'en trouve amélioré.

Suivant la complexité du système hôte, l'invention permet ainsi à ce système
- d'être en contact simultanément par N lignes d'entrées/sorties avec N cartes exécutant toutes les mêmes instructions, ce qui permet d'identifier la carte en défaut et de l'isoler pour la suite des tests;
- d'être en contact par moment avec N cartes simultanément, et à d'autres moments avec une seule d'entre-elles, les autres étant en attente, soit que le testeur n'ait pas sollicité de réponse, soit que ces cartes soit logiquement déconnectées du système hôte testeur et qu'elles n'aient pas reçu de commande.

En utilisant des moyens de multiplexage adaptés entre le système hôte (testeur) et les N cartes, on peut ainsi effectuer en parallèle les taches générant des réponses identiques dans toutes les cartes (si elles sont "bonnes"), puis isoler chaque carte, successivement pour effectuer des séquences différenciées, avant de revenir à nouveau à un fonctionnement en parallèle le cas échéant (exemple de déroulement typique).

## Revendications

1. Procédé de communication entre un système hôte et une carte à mémoire à protocole de transmission asynchrone, selon lequel un message de la carte est émis en réponse à une instruction de commande émise précédemment par le système hôte, comprenant un caractère ou une suite de plusieurs caractères dans un format déterminé, caractérisé en ce que dans ledit protocole une détection par la carte d'une instruction de demande de réponse (DR) émise par le système hôte précède l'envoi par la carte d'un message ou de chaque caractère d'un message.

2. Procédé de communication selon la revendication 1, caractérisé en ce que ladite instruction de demande de réponse (DR) est émise après une durée déterminée (d0) suivant l'envoi d'une instruction de commande par le système hôte, la durée déterminée correspondant à la durée d'exécution de ladite commande.

3. Procédé de communication selon la revendication 2, caractérisé en ce qu'une instruction de demande de réponse (DR) est émise pour chaque caractère suivant à recevoir, l'intervalle de temps séparant deux instructions de demande de réponse (DR) correspondant au minimum à la durée de transmission d'un caractère (n.ETU) augmentée de l'intervalle de temps (j.ETU) devant séparer l'émission de deux caractères selon le protocole de transmission asynchrone.

4. Procédé de communication selon l'une quelconque des revendications précédentes, caractérisé en ce que l'on peut supprimer le bit de synchronisation (start) au début de chaque caractère à émettre.

5. Carte à mémoire à transmission asynchrone sur une ligne d'entrée/sortie (I/O) de données, mettant en oeuvre un procédé de communication selon l'une quelconque des revendications 1 à 4, comprenant en mémoire un premier sous-programme exécutable (SP1) correspondant à un protocole de transmission asynchrone, selon lequel un message de la carte est émis en réponse à une instruction de commande précédemment envoyée par le système hôte, comprenant un caractère ou une suite de plusieurs caractères dans un format déterminé, caractérisé en ce que ladite carte comprend en mémoire un deuxième sous-programme exécutable (SP2) correspondant au premier sous-programme, mais n'autorisant l'envoi par la carte d'un message ou de chaque caractère d'un message qu'après une détection par la carte d'une instruction de demande de réponse émise par le système hôte, ledit deuxième sous-programme exécutable (SP2) étant activé en mode de test ou de personnalisation de ladite carte à mémoire, et désactivé sinon.

## Claims

1. Method of communicating between a host system and a memory card with an asynchronous transmission protocol, according to which a message from the card is sent in response to a control instruction sent previously by the host system, comprising a character or a series of several characters in a given format, characterised in that, in the said protocol, the detection by the card of a response request instruction (DR) sent by the host system precedes the sending by the card of a message or each character of a message.

2. Communication method according to Claim 1, characterised in that the said response request instruction (DR) is sent after a given period (d0) following the sending of a command instruction by the host system, the given period corresponding to the period of execution of the said command.

3. Communication method according to Claim 2, characterised in that a response request instruction (DR) is sent for each following character to be received, the interval of time separating two response request instructions (DR) corresponding at a minimum to the duration of transmission of a character (n.ETU) plus the interval of time (j.ETU) which has to separate the sending of two characters according to the asynchronous transmission protocol.

4. Communication method according to any one of the preceding claims, characterised in that it is possible to eliminate the synchronisation bit (start) at the start of each character to be sent.

5. Memory card with asynchronous transmission on a data input/output line (I/O), using a communication method according to any one of Claims 1 to 4, comprising in memory a first executable subprogram (SP1) corresponding to an asynchronous transmission protocol, according to which a message from the card is sent in response to a command instruction previously sent by the host system, comprising a character or a series of several characters in a given format, characterised in that the said card comprises in memory a second executable subprogram (SP2) corresponding to the first subprogram, but enabling the sending by the card of a message or each character of a message only after the detection by the card of a response request instruction sent by the host system, the said second executable subprogram (SP2) being activated in test mode or the mode of personalising of the said memory card, and otherwise deactivated.

## Patentansprüche

1. Kommunikationsverfahren zwischen einem Host-System und einer asynchronen Chipkarte mit Kommunikationsprotokoll, bei dem eine Nachricht der Karte als Antwort auf einen Steuerbefehl ausgegeben wird, der vorher durch das Host-System ausgegeben wurde, mit einem Zeichen oder einer Aufeinanderfolge mehrerer Zeichen in einem vorbestimmten Format, dadurch gekennzeichnet, daß in dem Protokoll eine Erfassung durch die Karte eines Antwortabfragebefehls (DR), der von dem Host-System ausgegeben wird, dem Ausgeben durch die Karte einer Nachricht oder eines jeden Zeichens einer Nachricht vorausgeht.

2. Kommunikationsverfahren nach Anspruch 1, dadurch gekennzeichnet, daß der Antwortabfragebefehl (DR) nach einer vorbestimmten Zeitdauer (d0) nach dem Senden eines Steuerbefehls durch das Host-System ausgegeben wird, wobei die vorbestimmte Zeitdauer der Ausführungsdauer dieses Befehls entspricht.

3. Kommunikationsverfahren nach Anspruch 2, dadurch gekennzeichnet, daß ein Antwortabfragebefehl (DR) für jedes Zeichen auf den Empfang ausgegeben wird, wobei das Zeitintervall, das zwei Antwortabfragebefehle (DR) trennt, dem Minimum der Übertragungszeitdauer eines Zeichens (n.ETU) entspricht, erhöht um das Zeitintervall (j.ETU) vor dem Trennen der Ausgabe der beiden Zeichen, gemäß dem asynchronen Übertragungsprotokoll.

4. Kommunikationsverfahren nach einem der vorhergehenden Ansprüche, dadurch gekennzeichnet, daß man das Synchronisationsbit (start) am Anfang eines jeden auszugebenden Zeichens unterdrücken kann.

5. Asynchronübertragungs-Chipkarte auf einer Eingabe/Ausgabe (I/O) Datenleitung, die ein Kommunikationsverfahren nach einem der Ansprüche 1 bis 4 ausführt, mit im Speicher einem ersten ausführbaren Unterprogramm (SP1), das einem asynchronen Übertragungsprotokoll entspricht, gemäß dem eine Information der Karte ausgegeben wird, in Antwort auf einen Steuerbefehl, der vorher durch das Host-System geschickt wurde, mit einem Zeichen oder einer Folge von mehreren Zeichen in einem vorbestimmten Format, dadurch gekennzeichnet, daß die Karte im Speicher ein zweites ausführbares Unterprogramm (SP2) aufweist, entsprechend dem ersten Unterprogramm, das jedoch die Ausgabe durch die Karte einer Nachricht oder eines jeden Zeichens einer Nachricht nur nach einem Erfassen durch die Karte eines Antwortabfragebefehls erlaubt, der von dem Host-System ausgegeben wird, wobei das zweite ausführbare Unterprogramm (SP2) im Testmode oder Persönlichkeitsmode der Speicherkarte aktiviert wird und wenn nicht, deaktiviert wird.
